Europäisches Patentamt

European Patent Office

Office européen des brevets

(11) Publication number: **0 447 733 A1**

# EUROPEAN PATENT APPLICATION

(21) Application number: **90500056.8**

(22) Date of filing: **21.06.90**

(51) Int. Cl.⁵: **A23G 3/00**

(30) Priority: **20.03.90 ES 9000920**

(43) Date of publication of application:
**25.09.91 Bulletin 91/39**

(84) Designated Contracting States:
**AT BE CH DE DK FR GB GR IT LI LU NL SE**

(71) Applicant: **ENRIQUE BERNAT F., S.A.**
**Avenida Diagonal 662-664, 5**
**E-08034 Barcelona(ES)**

(72) Inventor: **Bernat Fontlladosa, Enrique**
**Avda. Diagonal 662-664, No. 5**
**ES-08034 Barclona(ES)**

(74) Representative: **Gomez-Acebo y Pombo, José Miguel**
**c/o CLARKE, MODET & Co. Paseo de la Castellana 164**
**E-28046 Madrid(ES)**

(54) **Sweet on a stick.**

(57) Sweet on a stick, consisting of an external layer with two separate, hollow halves (2 and 3) joined together, one of which (3) is equipped with a stick (6). The other half, or both as the case may be, is half-spherical and made of a transparent substance. The two halves (2 and 3) encircle a nucleus which has different qualities and is visible from the outside.

FIG. 1

EP 0 447 733 A1

This invention refers to a sweet on a stick which consists of an external layer and a separate, central nucleus, whereby the external layer and the nucleus may have the same or different qualities.

A sweet of this type has an external layer comprising two separate, hollow halves, of which the facing, coinciding edges join together to form a central cavity where the nucleus is housed. This cavity is the same size as the nucleus. A non-edible wand is attached radially to the outside of one of these parts, e.g. made of wood or plastic, and this forms the stick of the sweet.

The idea of these sweets is to offer the consumer two different flavours or products. The external layer is soluble and made of an opaque sugar paste or similar substance. The nucleus may also be soluble, of a different flavour to that of the external layer, or it can be made of chewing gum.

The attraction of sweets having this composition is limited to the fact that the external layer and nucleus have different qualities or flavours. Given that the external layer is opaque, the characteristics of the nucleus can only be determined by observing the comments or information which appear on the sweet wrapping.

The aim of this invention is to develop a sweet of this type which is more attractive to the consumer and allows for the characteristics of the nucleus to be discovered by looking at or observing the sweet directly.

The sweet described in this invention can have different shapes and various features which are visible from the outside of the sweet, adding to its attraction and enabling the consumer to select a particular sweet, with a specific combination of flavours/products and the item/object forming the nucleus.

The sweet described in this invention is distinguished by the fact that at least the half of the external layer opposite the half equipped with a wand, has a rounded, transparent external surface, preferably semi-spherical, thereby offering a magnified view of the nucleus housed in the central part of the sweet, this transparent half acting as a magnifying lens.

Moreover, the two parts of the external layer can have rounded, external surfaces, e.g. semi-spherical, and can be transparent.

The wand which serves as a stick is attached to one of the above mentioned halves and it is possible for this half to have a radial extension shaped like a troncated cone, which increases the support zone of the wand.

The half of the external layer to which the wand is attached can have a troncated cone shape and may or may not be transparent, whilst the other half of the external layer is semi-spherical and transparent.

The composition and characteristics of the sweet described in this invention are clarified in the following description, making reference to the attached drawings in which a possible form of putting the invention into practice is detailed, this being given as a non-restrictive example.

Figure 1 is a diametrical section of the sweet made in accordance with this invention.

Figure 2 is a side view of a possible composition of this sweet.

Figure 3 is a similar view to that shown in figure 1, showing a possible variation.

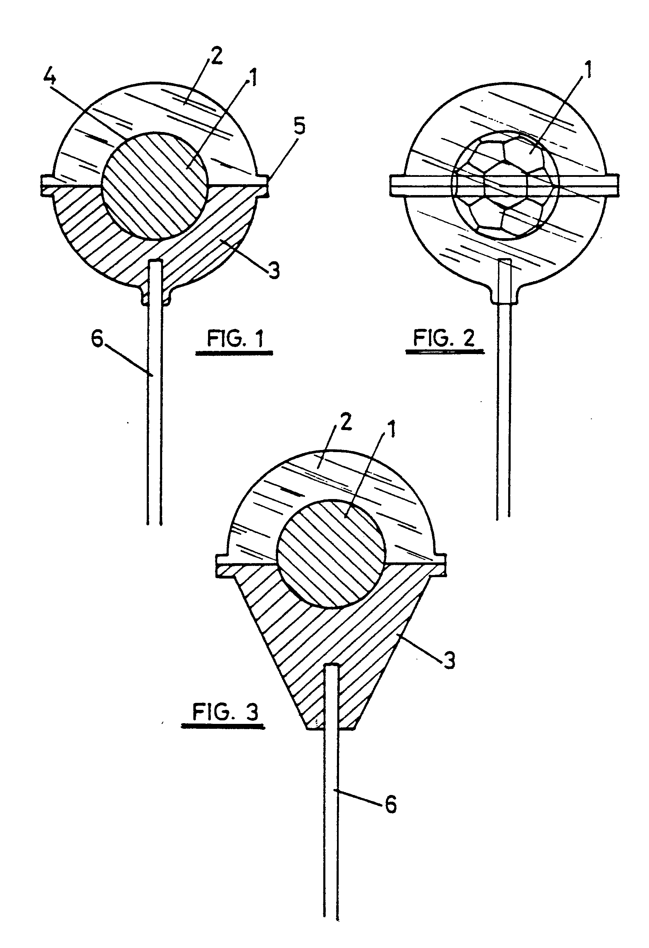

The sweet shown in figure 1 is made up of a central nucleus (ref. 1) and an external layer formed from two hollow halves (refs. 2 and 3), of which the facing, coinciding edges join together to form a cavity (ref. 4) in which the central nucleus (1) is housed. During the process of joining the two edges of the external layer, a peripherical nerve or thickened-band is formed (ref. 5).

In figure 1, the two halves of the external layer (refs. 2 and 3) are semi-spherical, part ref. 3 being of a coloured substance and part ref. 2 transparent, so that the colour and characteristics of the nucleus (1) can be observed from outside. As the external surface of the transparent part of the layer (2) has a curved convex shape, it acts as a magnifying glass through which the nucleus (1) is viewed on a magnified scale.

A non-edible wand (ref. 6) is attached to the coloured half, this wand being made of, for example, flexible plastic.

The layer parts (2 and 3) are made of a sugary, soluble substance whilst the nucleus may or may not be soluble; for example, it may consist of a piece of chewing gum, having the same or a different shape to that of the cavity (4) formed by the hollow section of the equal parts (2 and 3).

Moreover, part ref. 3 can be transparent, thereby forming a sweet as shown in figure 2, where the nucleus (1) is decorated to represent, for example, a football or tennis ball, and is visible, on a magnified scale, through the entire external surface of the sweet.

Figure 3 shows a sweet with the same composition as that shown in figure 1, different in that part ref. 3 of the external surface to which the wand or stick (6) is attached, is shaped like a troncated cone, whilst the other half is semi-spherical and the nucleus (1), as indicated above, is enclosed within both parts.

This composition ensures for a very attractive sweet, since at least one of the halves of the external surface is transparent, allowing for the central nucleus to be seen from outside and its charactertics to be observed. Moreover, the curved convex shape of the transparent external surface, gives rise to a magnifying glass effect, thereby providing for a magnified view of the nucleus (1).

**Claims**

1. A sweet on a stick, comprising a central nucleus and an external layer, preferably having different qualities, where the external layer is made up of two separate, hollow halves of which the facing, coinciding edges are joined together to form a cavity in which said nucleus is housed. A non-edible wand is attached radially to one of these halves, this serving as a stick; distinguished by the fact that at least the half of the external layer opposite that to which the wand is attached, has a rounded external transparent surface, preferably semi-spherical, thereby allowing for a magnified view of the nucleus housed inside.

FIG. 1

FIG. 2

FIG. 3

European
Patent Office

**EUROPEAN SEARCH
REPORT**

Application Number

**EP 90 50 0056**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 144 041   (FONTLLADOSA ENRIQUE BERNAT)<br>* Figures 1,2; page 2, lines 1-4,14-18,32-33 *<br>– – – | 1 | A 23 G 3/00 |
| Y | DE-A-2 935 691   (WRIGHLEY)<br>* Figure 3; claims 1,2,6,7,9,10; page 5, paragraph 2; page 6, paragraph 4; page 7, paragraphs 2,4; page 8, paragraph 1 *<br>– – – | 1 | |
| Y | FR-A-2 397 793   (C. DE NANTES D'AVIGNONET et al.)<br>* Figure 7; page 2, lines 26-28; page 1, lines 2,14-17,30-34; figure 2 *<br>– – – | 1 | |
| A | US-A-4 692 339   (C.G. STETSON et al.)<br>– – – | | |
| A | FR-A-2 032 125   (C. COLTEY)<br>– – – – – | | |

| TECHNICAL FIELDS SEARCHED (Int. Cl.5) |
|---|
| A 23 G |

The present search report has been drawn up for all claims

| Place of search | Date of completion of search | Examiner |
|---|---|---|
| The Hague | 08 August 90 | GUYON R.H. |